(19) Europäisches Patentamt
European Patent Office
Office européen des brevets

(11) **EP 4 418 061 A1**

(12) # EUROPEAN PATENT APPLICATION

(43) Date of publication:
**21.08.2024 Bulletin 2024/34**

(21) Application number: **24154189.5**

(22) Date of filing: **26.01.2024**

(51) International Patent Classification (IPC):
***G05B 23/02*** *(2006.01)*

(52) Cooperative Patent Classification (CPC):
**G05B 23/0283;** G05B 23/0221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 IN 202341005921**

(71) Applicants:
• **Robert Bosch GmbH
70442 Stuttgart (DE)**

• **Bosch Global Software Technologies Private
Limited
Karnataka, Bangalore 560095 (IN)**

(72) Inventors:
• **Balachandra, Varun
560085 Karnataka, Bangalore (IN)**
• **Gayathri, Prasad
560103 Bangalore, Karnataka (IN)**

(74) Representative: **Bee, Joachim
Robert Bosch GmbH
Zentralabteilung Patente
Postfach 30 02 20
70442 Stuttgart (DE)**

(54) **METHOD AND SYSTEM TO PREDICT REMAINING USEFUL LIFE OF AN EQUIPMENT**

(57) A method and a system to predict remaining useful life of an equipment is disclosed wherein a processor (1) is adapted to receive signals from the sensors (2) of the equipment (3); extract features from the sensor data; obtain a health indicator from the extracted features by principal component analysis; determine a critical time beyond which the degradation initiates in the equipment using pautas criteria; predict a future degradation curve; and determine the dynamic failure threshold based on degradation characteristics of said equipment. The dynamic failure threshold is determined in real time based on the degradation parameters unique to said equipment.

**Figure 1**

EP 4 418 061 A1

**Description**

**Field of the invention**

The present disclosure relates to estimation of remaining useful life of equipment and more specifically, a method and a system to predict remaining useful life of an equipment.

**Background of the invention**

Modern industries are dependent on highly complex machinery with several interlinked components. A failure in any of these components would result in huge losses in money and time, this in turn decreases the reliability of the machines. Therefore, it is crucial to determine when a fault has occurred in the machine equipment and also the time left to replace it to avoid sudden failure. This time period is known as the Remaining Useful Life (RUL). RUL is a subjective estimate of the number of remaining years/months that an item, component, or system is estimated to be able to function in accordance with its intended purpose before warranting replacement. Determining the RUL allows for better planning of maintenance activities and reduces costs and risks of sudden failure. Several methodologies have been explored to estimate the remaining useful life (RUL) of components, which can be broadly classified into data-driven, model based and hybrid approaches. An integral factor in all methods is the failure threshold, which determines when the component reaches the end of useful life.

Most existing methods use a fixed static failure threshold based on prior knowledge of the failure characteristics of the component. In studies where prior knowledge is unavailable, the threshold is mostly experienced based. In other cases where there is an abundance of run-to-failure data, that is, periodically collected data of similar components, from the day it was installed to the day it is retired, a similarity-based approach can be used. Here the RUL thresholds are determined based on the similarity between the degradation of the current component and other existing run-to-failure datasets.

These methods are not feasible in real-life scenarios where failure characteristics are not available. Additionally, they do not take into account the environment where it operates and the uniqueness of each component and its degradation. In most of the prior art, less importance is given to threshold determination, which in a way is crucial for accurate prediction of RUL. Additionally, there has never been an attempt to determine a dynamic failure threshold that is unique to each component and depends on the characteristics of its degradation. Some prior arts deploy deep learning techniques to predict the RUL.

The document EP4012525 A1 discloses systems and methods for predicting failures and remaining useful life (RUL) for equipment, which can involve, for data received from the equipment comprising fault events, conducting feature extraction on the data to generate sequences of event features based on the fault events; applying deep learning modeling to the sequences of event features to generate a model configured to predict the failures and the RUL for the equipment based on event features extracted from data of the equipment; and executing optimization on the model.

**Brief description of the accompanying drawings**

An embodiment of the invention is described with reference to the following accompanying drawings:

Figure 1 depicts a system to predict remaining useful life of an equipment.
Figure 2 depicts a flow chart for a method to predict remaining useful life of an equipment.

**Detailed description of the drawings**

The degradation characteristics, that is the characteristics which determine the degradation of a machine equipment include- the developed fault, the operating conditions, the environmental conditions, and the application for which it is used. The present disclosure develops a method to calculate a unique failure threshold based on the degradation characteristics of the component. This threshold would be dynamic, as it shall adapt based on the above-mentioned degradation characteristics.

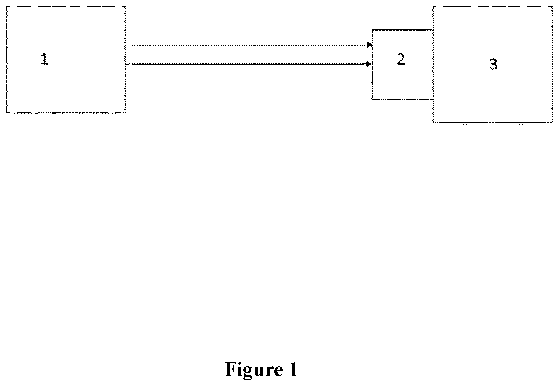

Referring to Figure 1, the same depicts a system to predict remaining useful life of an equipment. A processor (1) is in communication with a sensor (2) that extracts data from the equipment (3) whose remaining useful life (RUL) is to be estimated. Referring to Figure 1, disclosed is a processor to predict remaining useful life of an equipment, said equipment provided with at least one sensor. The processor is adapted to receive signals from the sensors (2) of the equipment (3). The processor then extracts features from the sensor(2) data. A health indicator is obtained from the extracted features by principal component analysis and a critical time beyond which the degradation initiates in the equipment (3) is determined using pautas criteria. A future degradation curve is then predicted and the dynamic failure threshold is determined based on degradation parameters of said equipment.

The process to determine the critical time uses a threshold calculated using pautas criteria, which is a formula based on a mean of the health indicator values till a time t and a standard deviation of the health indicator values till the time t.

Predicting the future degradation curve further comprises the steps of fitting an exponential curve into the existing health indicator curve. This is done by estimating the values of values of parameters $\phi, \theta$ and $\beta$. These parameters can be optionally determined by particle swarm optimization such that the error between the health indicator curve and the exponential curve is minimum.

Dynamic failure threshold is determined based on the exponential fit curve, the health indicator, the critical time, and the parameters $\phi$ and $\theta$ of the exponential curve at a time t.

For a better understanding of the disclosure, the specification would exemplify the RUL estimation of ball bearings. It is to be noted that the present exemplification is not limited to ball bearings and should not be construed as limiting the scope of the present invention. The processor periodically collets sensor data from the bearing to monitor its condition over time. Accelerometers positioned on the bearing housing are used to obtain vibration signals as they contain valuable information about the faults present in a bearing.

To extract useful information from the raw vibration data, the signals are preprocessed, and features are extracted. The features for the exemplified bearings can be the BPFO (Ball Pass Frequency Outer- which is the outer race failing frequency that corresponds physically to the number of balls or rollers that pass through a given point of the outer race each time the shaft makes a complete turn.), BPFI (Ball Pass Frequency Inner- or inner race failing frequency that corresponds physically to the number of balls or rollers that pass through a given point of the inner track each time the shaft makes a complete turn) , Ball spin frequency (BSF- or rolling element failing frequency that corresponds physically to the number of turns that a bearing ball or roller makes each time the shaft makes a complete turn) and FTF (fundamental train frequency- or cage falling frequency that corresponds physically to the number of turns that makes the bearing cage each time the shaft makes a complete turn.). The extracted features provide information about faults occurring in different parts of the bearing. These features are combined to make a general indicator for the bearing. Each bearing has its own geometric characteristics from which one can determine its failing frequencies. These frequencies will appear in the spectral signatures when the bearing is deteriorated.

Principal Component Analysis (PCA) is used to create the health indicator from said extracted features. The principal component analysis is a technique to reduce the dimensionality of large dataset in order to increase the interpretability of data whilst minimizing information loss. Principal components are new variables that are constructed as linear combinations or mixtures of the initial variables. These combinations are done in such a way that the new variables (i.e., principal components) are uncorrelated and most of the information within the initial variables is squeezed or compressed into the first components. The first principal component that is obtained from the features is used as the health indicator, as it contains the highest amount of information from all the features.

Once the health indicator is obtained, the critical time must be determined. The critical time denotes the point in time where a healthy bearing develops a fault and the degradation has begun. The estimation of RUL is performed only once the degradation has started, as the developed fault and its degradation curve would determine the end of useful life. The process to determine the critical time uses a threshold calculated using Pauta criteria. Pauta criteria is used to detect outliers (data point differing from other observations in a data) in a data and screens them out. The threshold is given by the following formula:

Start threshold(tc)= $\mu + 3\sigma$
Where $\mu$ is the mean of the health indicator values till time tc,
and $\sigma$ is the standard deviation of the health indicator till time tc.

Once the threshold is crossed, the degradation has started, and the critical time is obtained. The next step is to predict the future degradation curve to estimate when the curve would cross a failure threshold.

The prediction is done using an exponential degradation model, represented by the following formula,

$$expHI(t) = \phi + \theta * e^{\beta t}$$

An exponential curve is fit to the existing health indicator curve by estimating the values of parameters $\phi, \theta$ and $\beta$ such that the error between the health indicator and the exponential curve is minimum. Particle Swarm Optimization (PSO) can be optionally used to determine these parameters. PSO is an optimization technique which involves moving the particles(points) around in the search-space according to simple mathematical formula over the particle's position and velocity. Each particle's movement is influenced by its local best known position but is also guided toward the best known positions in the search-space, which are updated as better positions are found by other particles. This is expected to move the swarm toward the best solutions.

The final step is to determine the failure threshold. This failure threshold at time t is determined using the formula :

$$\text{Failure threshold(t)} = \text{expHI(t)} + (tc* \text{slope(t)} + \phi(t)) / (td\ (t)*\ \theta(t) + 1) - 0.1 * (\text{HI(t)} - \text{expHI(t)})$$

where expHI = value of fitted health indicator,
HI = value of health indicator,
tc = critical time,
td=time since the degradation started (the difference between current time and critical time/(time difference between consecutive measurements))
slope = slope of fitted health indicator at current time, and $\phi$ and $\theta$ are the parameters of the exponential curve at the current time t.

This formula is estimated by observing the relations between the expected failure threshold and the degradation parameters. The expected failure threshold is assumed as the value of the exponential fit curve at the end of life.

The dynamic threshold is based on the formula proposed in this disclosure. The static threshold is set as the last value of the health indicator. The dynamic threshold can predict the RUL accurately, and a static threshold does not provide good results.

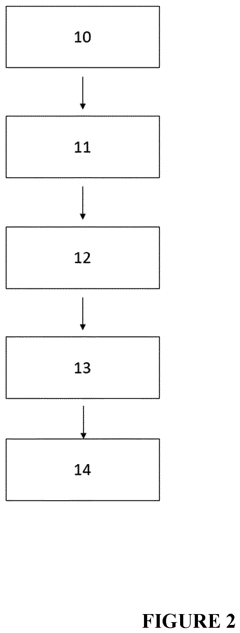

Referring to figure 2, the same is a flow chart for a method to predict remaining useful life of an equipment.

Disclosed is a method to predict remaining useful life of an equipment. The equipment is provided with at least one sensor. The method comprising the steps of: extracting features (10) from the sensor data ; obtaining a health indicator (11) from the extracted features by principal component analysis; determining a critical time (12) beyond which the degradation initiates in the machine equipment; predicting a future degradation curve (13); characterized in that method a further step of: determining a dynamic failure threshold (14) based on degradation parameters of said equipment.

The process to determine the critical time (12) uses a threshold, calculated using pautas criteria based on a mean of the health indicator values till a time (tc) and a standard deviation of the health indicator values till the time (tc).

Predicting the future degradation curve (13) further comprises the steps of: fitting an exponential curve into the existing health indicator curve by estimating the values of parameters $\phi, \theta$ and $\beta$; wherein, said parameters are determined such that the error between the health indicator curve and the exponential curve is minimum. The dynamic failure threshold is determined (14) based on : the exponential fit curve; the health indicator; the critical time; and the parameters $\phi$ and $\theta$ of the exponential fit curve at a time *t*.

The degradation curve for said equipment is updated based on the sensor data received over a time.

The dynamic failure threshold (14) is determined in real time based on the degradation parameters unique to said equipment.

The estimation of useful life begins with extracting features from the sensor data (14). These sensors can be (but not limited to) vibration sensors used in turbomachinery. For monitoring rotating machinery, a number of sensors of various types (velocity transducer, acceleration transducer, and displacement transducer) are mounted on the bearings of the rotating machinery to measure the initial vibration signals.

The extracted features provide information about faults occurring in different parts of the equipment. These features are combined to make a general indicator for the equipment. Each equipment has its own geometric characteristics from which one can determine its failing frequencies.

The next step is to obtain a health indicator (11) from the extracted features by principal component analysis. As explained above, the first principal component that is obtained from the features is used as the health indicator, as it contains the highest amount of information from all the features. The health indicator so obtained is used to denote the state of a component over time. This allows for monitoring of the degradation pattern.

This is followed by determining a critical time (12) beyond which the degradation initiates in the equipment. The process to determine the critical time uses a threshold calculated using Pauta criteria. Pauta criteria is used to detect outliers (data point differing from other observations in a data) in a data and screens them out. The threshold is given by the following formula:

$$\text{Start threshold(tc)} = \mu + 3\sigma$$

Where $\mu$ is the mean of the health indicator values till time tc, and $\sigma$ is the standard deviation of the health indicator till time tc.

Once the threshold is crossed, the degradation has started, and the critical time is obtained. The next step is to predict the future degradation curve (13) to estimate when the curve would cross a failure threshold. It is necessary to extend the health indicator values beyond the current time and estimate how the future degradation characteristics are.

The prediction is done using an exponential degradation model, represented by the following formula,

$$expHI(t) = \phi + \theta * e^{\beta t}$$

An exponential curve is fit to the existing health indicator curve by estimating the values of parameters $\phi, \theta$ and $\beta$ such that the error between the health indicator and the exponential curve is minimum. Particle Swarm Optimisation (PSO) can be optionally used to determine these parameters. PSO is an optimization technique which involves moving the particles(points) around in the search-space according to simple mathematical formula over the particle's position and velocity. Each particle's movement is influenced by its local best-known position but is also guided toward the best known positions in the search-space, which are updated as better positions are found by other particles. This is expected to move the swarm toward the best solutions.

This is followed by determining a dynamic failure threshold (14) based on degradation parameters of said equipment. Failure threshold denotes the value of the health indicator above which the component is highly prone to failures. The time at which the health indicator crosses this threshold is identified as the end of useful life.

The failure threshold is an integral component in this process and is crucial for estimating the RUL accurately. In most works, a static threshold is determined based on data extracted from previous failures. But this method may not be accurate for a component being utilized in a variety of conditions. This leads to a heavy dependence on data for estimating the threshold, and results in a threshold specific to the use case of the component. Additionally, it does not take into account the characteristics of the degradation as it progresses. Each fault is unique, and its degradation would also be unique. Therefore, a common static failure threshold would not accurately predict RUL.

The final step is to determine the failure threshold. This failure threshold at time t is determined using the formula :

$$\text{Failure threshold(t)} = expHI(t) + (tc * slope(t) + \phi(t)) / (td(t) * \theta(t) + 1) - 0.1 * (HI(t) - expHI(t))$$

where expHI = value of fitted health indicator,
HI = value of health indicator,
tc = critical time,
td = time since the degradation started (the difference between current time and critical time/(time difference between consecutive measurements))
slope = slope of fitted health indicator at current time,
and $\phi$ and $\theta$ are the parameters of the exponential curve at the current time t.

The present disclosure advantageously estimates the failure threshold with no prior knowledge of failure characteristics. It is completely based on the degradation of the component and varies over time as the degradation progresses. This method uses the characteristics of the model that is employed to predict the degradation curve and other characteristics of the degradation.

**Claims**

1. A method to predict remaining useful life of an equipment, said equipment provided with at least one sensor, the method comprising the steps of:

    - extracting features (10) from the sensor data ;
    - obtaining a health indicator (11) from the extracted features by principal component analysis;
    - determining a critical time (tc)(12) beyond which the degradation initiates in the machine equipment;
    - predicting a future degradation curve ;
    **characterized in that** method a further step of:
    - determining a dynamic failure threshold (14) based on degradation parameters of said equipment.

2. The method to predict remaining useful life of a machine equipment as claimed in Claim 1, wherein, the process to determine the critical time (12) uses a threshold, calculated using pautas criteria based on a mean of the health indicator values till a time (tc) and a standard deviation of the health indicator values till the time (tc).

3. The method to predict remaining useful life of a machine equipment as claimed in Claim 1, wherein, predicting the future degradation curve (13) further comprises the steps of:

   - fitting an exponential curve into the existing health indicator curve by estimating the values of values of parameters $\phi, \theta$ and $\beta$; wherein,

   said parameters are determined such that the error between the health indicator curve and the exponential curve is minimum.

4. The method to predict remaining useful life of a machine equipment as claimed in Claim 1, wherein, the dynamic failure threshold is determined (14) based on :

   - the exponential fit curve;
   - the health indicator;
   - the critical time ;and
   - the parameters $\phi$ and $\theta$ of the exponential fit curve at a current time t.

5. The method to predict remaining useful life of a machine equipment as claimed in Claim 1, wherein, the degradation curve for said equipment is updated based on the sensor data received over a time.

6. The method to predict remaining useful life of a machine equipment as claimed in Claim 1, wherein, the dynamic failure threshold is determined in real time based on the degradation parameters unique to said equipment.

7. A processor (1) to predict remaining useful life of an equipment, said equipment provided with at least one sensor(2) , said processor adapted to:

   - receive signals from the sensors(2) of the equipment (3);
   - Extract features from the sensor (2) data ;
   - obtain a health indicator from the extracted features by principal component analysis;
   - determine a critical time beyond which the degradation initiates in the equipment (3) using pautas criteria;
   - predict a future degradation curve ; and
   - determine the dynamic failure threshold based on degradation characteristics of said equipment.

8. The processor (1) to predict remaining useful life of the equipment (3) as claimed in claim 5, wherein, the process to determine the critical time uses a threshold calculated using pautas criteria based on a mean of the health indicator values till a time t and a standard deviation of the health indicator values till the time t.

9. The processor(1) to predict remaining useful life of a equipment (3) as claimed in claim 5, wherein, predicting the future degradation curve further comprises the steps of:

   - fitting an exponential curve into the existing health indicator curve by estimating the values of values of parameters $\phi, \theta$ and $\beta$; wherein,
   - said parameters are determined such that the error between the health indicator curve and the exponential curve is minimum.

10. The processor (1) to predict remaining useful life of the equipment (3) as claimed in claim 5, wherein, the dynamic failure threshold is determined based on:

   - the exponential fit curve;
   - the health indicator;
   - the critical time ;and
   - the parameters $\phi$ and $\theta$ of the exponential curve at a current time t.

**Figure 1**

**FIGURE 2**

**EP 4 418 061 A1**

Europäisches Patentamt
European Patent Office
Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU HE ET AL: "Pump remaining useful life prediction based on multi-source fusion and monotonicity-constrained particle filtering", MECHANICAL SYSTEMS AND SIGNAL PROCESSING, ELSEVIER, AMSTERDAM, NL, vol. 170, 24 January 2022 (2022-01-24), XP086981633, ISSN: 0888-3270, DOI: 10.1016/J.YMSSP.2022.108851 [retrieved on 2022-01-24] * page 4, second paragraph * * Chapter 4 "The technical route illustration" * * page 16, second to fourth paragraphs * * page 18, second paragraph * * page 20, last paragraph to page 21, first paragraph * * page 27, last paragraph * * Chapter 6 "Discussion" * ----- | 1-10 | INV. G05B23/02 |
| A | LI QIANG ET AL: "Remaining Useful Life prediction of rolling bearings based on risk assessment and degradation state coefficient", ISA TRANSACTIONS, INSTRUMENT SOCIETY OF AMERICA. PITTSBURGH, US, vol. 129, 4 February 2022 (2022-02-04), pages 413-428, XP087193426, ISSN: 0019-0578, DOI: 10.1016/J.ISATRA.2022.01.031 [retrieved on 2022-02-04] * Chapter 3. "Proposed methods" * * Chapter 5.2 "Discussion on generality and limitation" * ----- | 1-10 | TECHNICAL FIELDS SEARCHED (IPC) G05B |

The present search report has been drawn up for all claims

| Place of search | Date of completion of the search | Examiner |
|---|---|---|
| Munich | 5 July 2024 | Hristov, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 418 061 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4012525 A1